**Europäisches Patentamt**

**European Patent Office**

**Office européen des brevets**

(19)

(11) Veröffentlichungsnummer : **0 443 223 B1**

(12) **EUROPÄISCHE PATENTSCHRIFT**

(45) Veröffentlichungstag der Patentschrift :
**01.09.93 Patentblatt 93/35**

(21) Anmeldenummer : **90250056.0**

(22) Anmeldetag : **19.02.90**

(51) Int. Cl.⁵ : **F23J 13/04, E04F 17/02, F16L 37/08**

(43) Veröffentlichungstag der Anmeldung :
**28.08.91 Patentblatt 91/35**

(45) Bekanntmachung des Hinweises auf die
Patenterteilung :
**01.09.93 Patentblatt 93/35**

(84) Benannte Vertragsstaaten :
**AT BE CH DE DK ES FR GB GR IT LI LU NL SE**

(56) Entgegenhaltungen :
**DE-A- 2 856 520**
**DE-U- 8 803 395**

(73) Patentinhaber : **LDW
METALL-VERARBEITUNG GMBH
Scheeren 8
D-28865 Lilienthal (DE)**

(72) Erfinder : **Iffländer, Wolfgang-J.-F.
Kiebitzbrink 79 a
D-2800 Bremen 33 (DE)**

(74) Vertreter : **Hoormann, Walter, Dr.-Ing. et al
FORRESTER & BOEHMERT
Franz-Joseph-Strasse 38
D-80801 München (DE)**

(54) **Rohrabschnitt für eine mehrteilige Rohrleitung.**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft einen Rohrabschnitt für eine Rohrleitung, insbesondere für ein Schornstein-Einsatzrohr, bei der jeweils benachbarte Rohrabschnitte endseitig miteinander nach Art einer Steckverbindung verbunden sind, wobei der Außendurchmesser des einen (ersten) Endabschnittes eines Rohrabschnittes dem lichten Innendurchmesser des anderen (zweiten) Endabschnittes des Rohrabschnittes entspricht, mit wenigstens einem mit Abstand zum einen (ersten) Ende vorgesehenen ersten Rastvorsprung und wenigstens einem mit entsprechendem Abstand zum anderen (zweiten) Ende vorgesehenen, L-förmigen zweiten Rastvorsprung, der im montierten Zustand mit dem ersten Rastvorsprung eines benachbarten Rohrabschnittes formschlüssig zusammenwirkt, wobei der eine (erste) L-Schenkel des zweiten Rastvorsprungs im wesentlichen achsparallel verläuft und die Breite der L-Schenkel im wesentlichen gleich der größten Breite des ersten Rastvorsprungs ist.

Insbesondere mit der Installation eines modernen Niedertemperatur-Heizkessels ist bei einer Umrüstung u.a. i.a. auch eine Sanierung des Schornsteins, zumindest dessen Querschnittsanpassung erforderlich, da dieser nicht mehr wie bei Einsatz eines Hochtemperatur-Kessels hinreichend aufgeheizt wird, um eine Kondensatbildung im Schornstein mit den hinlänglich bekannten nachteiligen Folgen zu vermeiden. Hierfür bedarf es vielmehr einer angepaßten Dimensionierung, wofür überwiegend relativ dünnwandige sog. Einsatzrohre aus nicht rostendem Edelstahl verwendet werden (s.a. auch DIN 18160 bzw. 4705 sowie entsprechende Richtlinien für Schornstein-Querschnittsverminderungen, geprüft vom Staatl. Materialprüfamt Nordrhein-Westfalen gemäß Prüfzeugnis 33 0566 888).

Die Schornstein-Einsatzrohre sind regelmäßig mehrschüssig (bestehen also aus mehreren jeweils endseitig miteinander verbundenen Rohrabschnitten), und zwar ist die Ausbildung und Anordnung i.a. so, daß die Rohrabschnitte an ihrem einen Ende aufgeweitet sind, damit ein benachbarter Rohrabschnitt mit seinem entsprechenden anderen Endabschnitt in den aufgeweiteten Endabschnitt des ihm benachbarten Rohrabschnittes gesteckt werden kann. Eine feste, innige Verbindung einander benachbarter Rohrabschnitte von Schornstein-Einsatzrohren, die u. a. schon aufgrund des z. T. sehr erheblichen Temperaturgefälles und der damit verbundenen unterschiedlichen Wärmeausdehnungen erforderlich ist, da man selbstverständlich verhindern muß, daß es im Verlaufe der Betriebszeit zu einem Lösen benachbarter Rohrabschnitte kommen kann, erfolgte dabei überwiegend bisher jeweils mit einem in der Art einer Schelle ausgebildeten Klemmband. Dieses ist in mehrfacher Hinsicht höchst nachteilig.

Ganz abgesehen davon, daß es bei einem mangelhaften, zu geringen beziehen der einander benachbarte Rohrabschnitte verbindenden Klemmband-Schellen dennoch zu einem Lösen einander benachbarter Rohrabschnitte kommen kann, und daß es bei einem zu starken beziehen der Befestigungselemente derartiger Klemmband-Schellen nicht selten zu einer Beschädigung ihrer Befestigungselemente oder sogar der Rohrabschnitte kommt, sind die bekannten Rohrleitungen der hier in Rede stehenden Art nicht zuletzt auch deshalb noch höchst nachteilig, weil der erforderliche Aufwand für die (Verbindungs-)Klemmband-Schellen sowohl fertigungstechnisch als auch bzgl. der Montage erheblich ist. Es kommt weiterhin hinzu, daß die Klemmband-Schellen bekannter Rohrleitungen der hier in Rede stehenden Art zwangsnotwendigerweise (z.T. sogar erheblich) über den Umfang der Rohrleitung bzw. deren Rohrabschnitte nach außen vorstehen, so daß es bei der Montage beim Absenken häufig zu Verhakungen, Einrissen u.dgl. kommt. Werden diese Schwierigkeiten dann - wie dieses nicht selten der Fall ist - mit Gewalt behoben, so wird dabei nicht selten die einem Schornstein-Einsatzrohr außen unmittelbar benachbarte Isolierung beschädigt oder es kommt zu anderen (z.T. erheblichen) Mängeln.

Aus der DE-A-2 856 520 ist ein gattungsgemäßer Rohrabschnitt zum Bilden einer Rohrleitung bekannt, der eine formschlüssige Verbindung mit benachbarten Rohrabschnitten gleicher Ausbildung ermöglicht. Hierfür ist der bekannte Rohrabschnitt mit Abstand zu seinem einen (ersten) Ende mit noppenförmigen ersten Rastvorsprüngen und an seinem anderen (zweiten) Ende mit L-förmigen zweiten Rastvorsprüngen versehen, deren Breite gleich der größten Breite der ersten Rastvorsprünge ist, und deren einer (erster) L-Schenkel jeweils vom zweiten Ende des Rohrabschnittes aus achsparallel verläuft und an seinem anderen Ende in einen rechtwinklig dazu in Umfangsrichtung verlaufenden L-Schenkel übergeht.

Diese Ausbildung hat zur Folge, daß sich zwei einander benachbarte Rohrabschnitte einer zu bildenden Rohrleitung bei der Montage nur sehr begrenzt relativ zueinander verdrehen lassen, was aber insbesondere für Rohrleitungen mit Prüföffnungen, Feuerungsanschlüssen od. dgl. nachteilig ist, weil dort bei der Montage eine genaue Anpassung der Verdrehstellung eines Rohrabschnittes um die Längsachse zwecks Anpassung an die Umgebung wünschenswert bzw. erforderlich ist. Werden zu diesem Zweck zwei einander benachbarte Rohrabschnitte der vorstehend beschriebenen Ausgestaltung entgegen der Verriegelungsrichtung gegeneinander verdreht, so kann es zu einem unbeabsichtigten Lösen der Verbindung kommen.

Der vorliegenden Erfindung liegt die Aufgabe zugrunde, die bekannten Rohrabschnitte der eingangs beschriebenen Gattung insbesondere dahingehend zu verbessern, daß bei einer sicheren formschlüssigen Verbindung einander benachbarter Rohrabschnitte dennoch ein unbegrenztes relatives Verdrehen und ein (relativ einfaches und müheloses) gegenseitiges Lösen einander benachbarter Rohrabschnitte möglich ist. Weiterhin soll der erfindungsgemäße Rohrabschnitt auch eine mühelose und zweckmäßige Anordnung von Regenhauben, Abdeckringen, Prüföffnungen, Kamintüren, Dehnmanschetten, Zugreglern, Feuerungsanschlüssen, Reduzierstücken u.dgl, gestatten und auch für (in der Regel S-förmige sog.) gezogene Schornsteine geeignet sein.

Die Lösung dieser Aufgabe erfolgt erfindungsgemäß dadurch, daß der achsparallele erste L-Schenkel des zweiten Rastvorsprungs mit Abstand zum zweiten Ende des Rohrabschnittes endet, und daß der zweite L-Schenkel des zweiten Rastvorsprungs im Bereich einer konzentrischen Sicke liegt, deren Breite im wesentlichen gleich der größten Breite des ersten Rastvorsprungs ist.

Dabei kann bei einer besonders einfachen und dennoch höchst zweckmäßigen Ausgestaltung der (ein) erste(r) Rastvorsprung im wesentlichen kegel- bzw. "pickelförmig" ausgebildet sein, doch hat sich u.a. auch eine Ausgestaltung als höchst zweckmäßig erwiesen, bei welcher der (ein) erste(r) Rastvorsprung im wesentlichen tropfen- bzw. keilförmig ausgebildet ist, insbesondere wenn der erste Rastvorsprung dabei in seitlicher Ansicht rampenförmig ausgebildet ist, wobei der Rampenwinkel seines zum ersten Ende des Rohrabschnittes verlaufenden Abschnittes nur wenige Grad (z.B. 5 bis 10°) beträgt, und insbesondere wenn der Rampenwinkel des dem ersten Ende des Rohrabschnittes abgekehrten Abschnittes des erten Rastvorsprunges erheblich steiler ausgebildet ist und bspw. etwa 30 bis 45° beträgt.

Sind zwei erste Rastvorsprünge vorgesehen, so liegen diese zweckmäßigerweise diametral einander gegenüber. Bei drei (oder ggf. auch noch mehr) ersten Rastvorsprüngen wird ebenfalls der Teilungs- bzw. Bogenwinkel zwischen einander benachbarten ersten Rastvorsprüngen im wesentlichten gleich groß gewählt.

Weitere Ausgestaltungen der vorliegenden Erfindung sind in den Unteransprüchen beschrieben und werden weiter unten auch noch anhand von Ausführungsbeispielen erläutert.

Die Erfindung wird anschließend unter Bezugnahme auf eine Zeichnung an Ausführungsbeispielen weiter erläutert. Es zeigt:

Fig. 1    eine Seitenansicht einer ersten Ausgestaltung eines erfindungsgemäßen Rohrabschnittes in Richtung des Pfeiles I in Fig. 2 gesehen;

Fig. 2    einen (Halb-)Schnitt durch den Rohrabschnitt gemäß Fig. 1 in Richtung der Schnittlinie 11-11 in Fig. 1 gesehen;

Fig. 3    eine zweite Ausführungsform des erfindungsgemäßen Rohrabschnittes mit einer modifizierten Ausbildung des ersten Rastvorsprunges im Ausschnitt in Richtung des Pfeiles III in Fig. 4 gesehen;

Fig. 4    eine (Teil-)Explosionsdarstellung der einander zugekehrten Endabschnitte zweier Rohrabschnitte in einer Ausgestaltung gemäß Fig. 3;

Fig. 5    eine Darstellung zur Montage eines aus erfindungsgemäßen Rohrabschnitten bestehenden Schornstein-Einsatzrohres beim Einführen des ersten Rohrabschnittes und kurz vor der Montage des zweiten Rohrabschnittes;

Fig. 6    eine Darstellung zur gegenseitigen Verbindung und formschlüssigen Verriegelung zweier einander benachbarter Rohrabschnitte;

Fig. 7    eine Darstellung zur Montage von Distanzhaltern;

Fig. 8    die Anordnung einer Zwischenreinigung bei einem aus erfindungsgemäßen Rohrabschnitten bestehenden Schornstein-Einsatzrohr;

Fig. 9    eine Darstellung gemäß Fig. 8;

Fig.10    ein aus erfindungsgemäßen Rohrabschnitten bestehendes Schornstein-Einsatzrohr bei einem gezogenen Schornstein;

Fig.11    ein Installationsbeispiel für einen im wesentlichen aus erfindungsgemäßen Rohrabschnitten bestehenden Schornstein; und

Fig.12    ein weiteres Installationsbeispiel für einen aus erfindungsgemäßen Rohrabschnitten bestehenden Standardschornstein mit einer Schornsteinhöhe von 6 m (und einer wirksamen Höhe von 5,6 m).

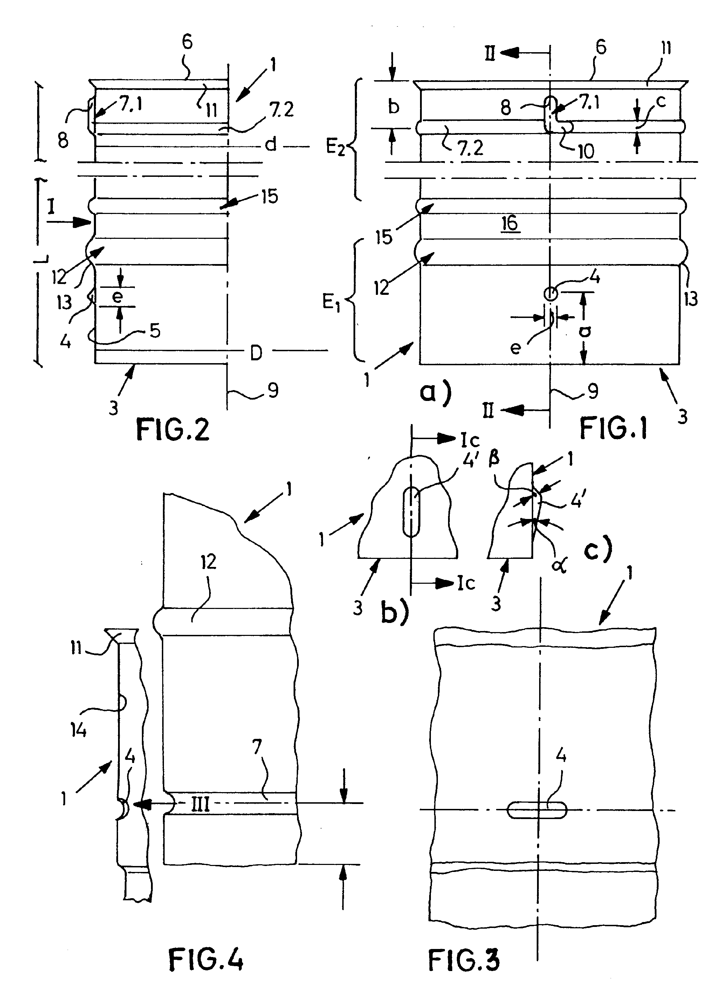

Die Fig. 1 und 2 der Zeichnung zeigen einen Rohrabschnitt 1 für ein Schornstein-Einsatzrohr 2 (s. Fig. 8 bis 12), welches mehrere Rohrabschnitte 1 aufweist, wobei jeweils einander benachbarte Rohrabschnitte 1, 1 im montierten Zustand miteinander verbunden sind.

Zu diesem Zweck ist zunächst einmal der Außendurchmesser D jedes Rohrabschnittes 1 an dessen einem (ersten) Endabschnitt $E_1$ jedes Rohrabschnittes 1 entsprechend dem lichten Innendurchmesser d des anderen (zweiten) Endabschnittes $E_2$ jedes Rohrabschnittes 1 ausgebildet, so daß jeweils zwei einander benachbarte Rohrabschnitte 1, 1 des Schornstein-Einsatzrohres 2 in der Art einer Steckverbindung miteinander zu verbinden sind.

Da eine solche (reibschlüssige) Steckverbindung aber bei den zum Teil erheblichen (unterschiedlichen) Wärmedehnungen, die aufgrund des Temperaturgefälles zwangsläufig entstehen, für eine sichere gegenseitige Halterung einander benachbarter Rohrabschnitte 1, 1 nicht ausreicht, ist bei dem Rohrabschnitt 1 in der Ausgestaltung gemäß den Fig. 1 und 2 mit Abstand a zum (unteren) ersten Ende 3 jedes Rohrabschnittes 1 ein kegel- bzw. "pickelförmiger" erster Rastvorsprung 4 ausgebildet, der über die Außenseite 5 des Rohrabschnittes 1 nach außen vorsteht (s. Fig. 2) und - mit entsprechendem Abstand b zum anderen (zweiten) Ende 6 des Rohrabschnittes 1 - ein zweiter Rastvorsprung 7, der im montierten Zustand mit einem ersten Rastvorsprung 4 eines benachbarten Rohrabschnittes 1 formschlüssig zusammenwirkt.

Genauer gesagt sind bei dem Ausführungsbeispiel gemäß den Fig. 1 und 2 zwei zweite Rastvorsprünge 7 vorhanden, nämlich ein zweiter Rastvorsprung 7.1, der L-förmig ausgebildet ist, wobei der eine (erste) L-Schenkel 8 im wesentlichen parallel zur Mittelachse 9 des Rohrabschnittes 1 verläuft und im Abstand b zum zweiten Ende 6 des Rohrabschnittes 1 endet, und wobei die Breite c der L-Schenkel 8, 10 im wesentlichen gleich der größten Breite bzw. dem Durchmesser e des zugeordneten ersten Rastvorsprunges 4 ist.

Darüber hinaus ist ein zweiter Rastvorsprung 7.2 vorhanden, der als konzentrische Sicke ausgebildet ist, deren Breite c im wesentlichen gleich dem Durchmesser e des ersten Rastvorsprunges 4 ist. Aus Fig. 1 ist erkennbar, daß der zweite L-Schenkel 10 in der Sicke 7.2 liegt.

Es sei darauf verwiesen, daß in Ausgestaltung des Rohrabschnittes 1 gemäß den Fig. 1 und 2 auch ggf, zwei oder noch mehr erste Rastvorsprünge 4 vorgesehen sein können, die dann vorzugsweise mit gleichem Teilungswinkel über den Umfang des Rohrabschnittes 1 verteilt angeordnet sind, und denen ggf. vorzugsweise jeweils ein zweiter Rastvorsprung 7.1 zugeordnet ist, während der als Sicke ausgebildete zweite Rastvorsprung 7.2 ersichtlich mit einer beliebigen Anzahl erster Rastvorsprünge 4 eines benachbarten Rohrabschnittes 1 zusammenwirken kann.

Es sei noch darauf verwiesen, daß die Rohrabschnitte 1 jeweils an ihrem oberen zweiten Ende 6 etwa unter 45° nach außen umgebördelt sind, wodurch ein entsprechender Einführabschnitt 11 entsteht, der ein Zusammenstecken zweier benachbarter Rohrabschnitte 1, 1 weiterhin vereinfacht.

Es sei noch darauf verwiesen, daß der erste Rastvorsprung 4 in Ausgestaltung auch im wesentlichen tropfen- bzw. keilförmig ausgebildet sein kann, wie dieses in den Fig. 1 b) und 1 c) dargestellt ist, in denen der erste Rastvorsprung mit 4' bezeichnet ist, wobei bei einer solchen Ausgestaltung der erste Rastvorsprung 4' ersichtlich in seitlicher Ansicht rampenförmig ausgebildet sein kann, und zwar bevorzugt derart, daß der Rampenwinkel $\alpha$ seines zum ersten Ende 3 des Rohrabschnittes 1 verlaufenden Abschnittes nur wenige Grad (z.B. 5 bis 10°) beträgt, während bevorzugt der Rampenwinkel $\beta$ des dem ersten Ende 3 abgekehrten Abschnittes eines derart ausgestalteten ersten Rastvorsprunges 4' zweckmäßigerweise erheblich steiler ausgebildet ist, nämlich bspw. mit 30°, um einerseits ein einfaches Zusammenstecken zu ermöglichen, andererseits dann aber im montierten Zustand eine sichere formschlüssige Halterung zu gewährleisten.

Wie bereits aus den Fig. 1 a) und 2 hervorgeht, sind die erfindungsgemäßen Rohrabschnitte 1 bei dieser Ausgestaltung mit einer über die Außenseite 5 des Rohrabschnittes 1 vorstehenden, eingeformten, konzentrisch umlaufenden Sicke 12 versehen, deren eine Flanke 13 im montierten Zustand am ersten Ende 3 eines benachbarten Rohrabschnittes 1 anliegt, wenn die beiden Rastvorsprünge 4, 7 mit gegenseitigem formschlüssigen Eingriff montiert sind.

Wie weiterhin bereits aus den Fig. 1 und 2 hervorgeht, sind die ersten und zweiten Rastvorsprünge 4 bzw. 7 bei diesem Ausführungsbeispiel in die Rohrwandung des Rohrabschnittes 1 eingeformt und stehen nach außen über die Außenseite 5 vor.

Eine solche Ausgestaltung ist indes ersichtlich nicht obligatorisch, wie sich aus dem Ausführungsbeispiel gemäß den Fig. 3 und 4 ergibt, bei dem sowohl der als Kurzsicke ausgebildete erste Rastvorsprung 4 als auch der als umlaufende Sicke ausgebildete zweite Rastvorsprung 7 jeweils nach innen in den Rohrabschnitt 1 eingeformt sind, also jeweils nach innen über die Innenseite 14 des Rohrabschnittes 1 vorstehen. Dabei sind im übrigen gleiche oder gleichwirkende Teile bzw. Abschnitte in den Fig. 3 und 4 mit den gleichen Bezugszeichen versehen wie in den Fig. 1 und 2.

Die Rohrabschnitte 1 bestehen materialmäßig aus rostfreiem Edelstahl, nämlich V4A-Stahl und weisen bei kleineren Durchmessern eine Wandstärke von 0,6, bei größeren Durchmessern von 1,0 mm auf, und zwar bei Einheitslängen L von wahlweise 1000 mm, 750 mm, 500 mm, 330 mm und 250 mm, deren Endabschnitte indes jeweils gleich ausgebildet sind.

Bzgl. der Ausgestaltung gemäß den Fig. 1 und 2 sei noch nachgetragen, daß mit relativ geringem Abstand zur Sicke 12 noch eine weitere Sicke 15 vorhanden ist, und daß der zwischen den Sicken 12 und 15 liegende Abschnitt 16 im Hinblick auf die durch entsprechende teilweise Aufweitung entstandenen unterschiedlichen Durchmesser an den beiden Endabschnitten des Rohrabschnittes 1 leicht konisch verjüngt ausgebildet ist.

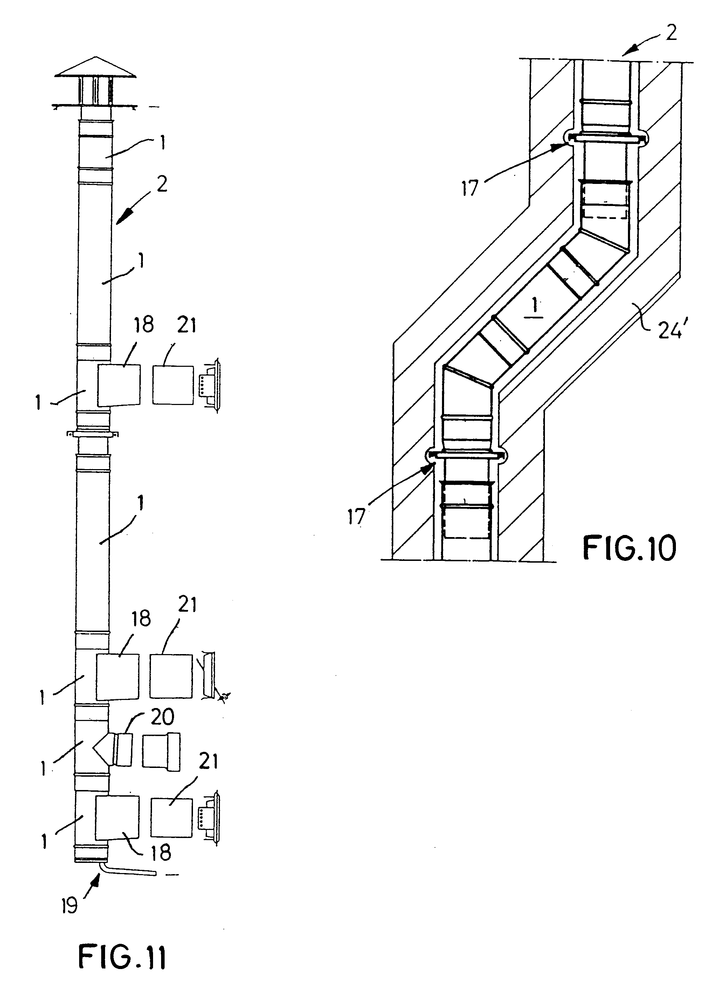

Für eine Montage eines u.a. und im wesentlichen aus Rohrabschnitten 1 bestehenden Schornstein-Einsatzrohres 2 wird der vorhandene, zu sanierende bzw. umzurüstende Schornstein zunächst geprüft und vermessen, wobei die Einbaumaße durch eine Querschnittsberechnung unter Einbeziehung des neuen Heizkessels festgelegt werden. Dabei sind bei gezogenen Schornsteinen (s. Fig. 10) Verstellbögen sowie wenigstens eine Dehnmanschette 17 zu berücksichtigen, und für den Einbau eines Zugreglers ist eine (ggf. weitere) Prüföffnung erforderlich. Beträgt der sich ergebende Hohlraum zwischen dem Einzugsrohr und der Schornsteinwange mehr als etwa 4 cm, sind möglichst Wärmedämmschalen einzubauen.

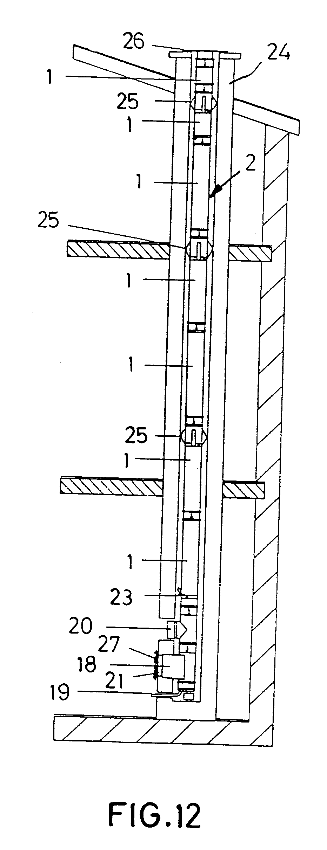

Bei der Montage beginnt man zweckmäßigerweise mit der Prüföffnung 18 der Kondensatschale 19 und des Feuerungsanschlusses 20 (s. z.B. Fig. 11), wobei der Schornstein im Bereich der Prüföffnung 18 der Kondensatschale 19 und des Feuerungsanschlusses 20 aufgestemmt wird. Die Teile werden lotrecht auf einer Unterlage (z.B. einem halben Ziegel) mit der Kondensatschale 19 aufgesetzt und mit Mineralwolle rundum ausgestopft. Sodann wird zweckmäßigerweise eine Prüföffnung-Verlängerung 21 bis zur Vorderkante der Schornsteinwange eingebaut.

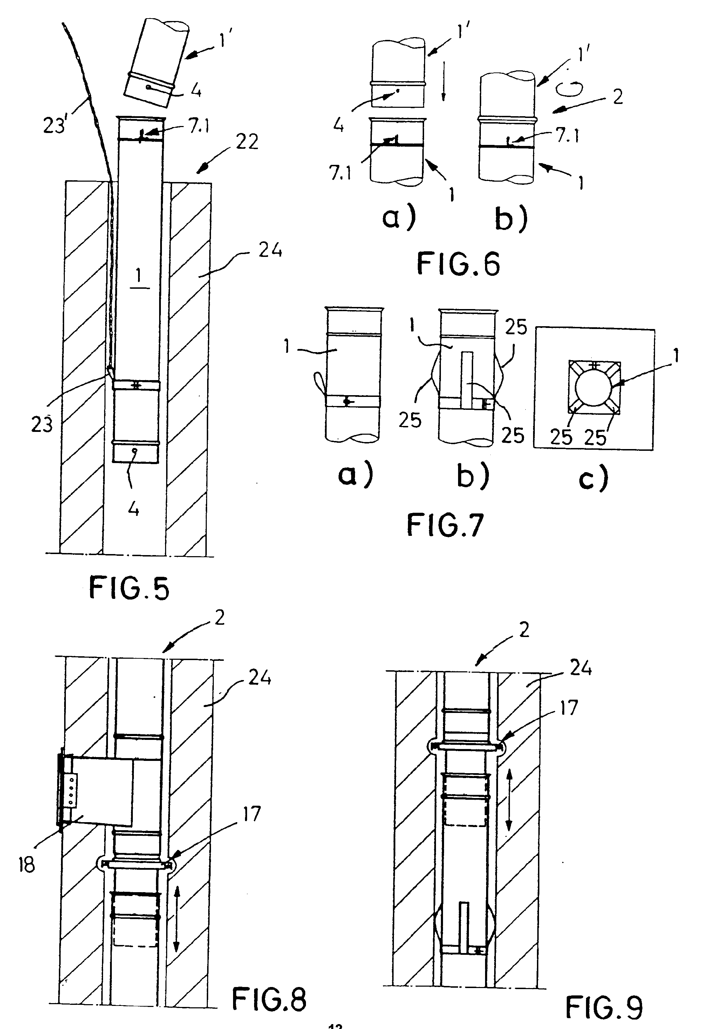

In der Regel werden die Rohrabschnitte 1 zweckmäßigerweise vom Schornsteinkopf 22 aus montiert. Hierzu befestigt man zweckmäßigerweise eine Schlaufe 23 am ersten Rohrabschnitt 1 und an dieser ein Seil 23', wie dieses aus Fig. 5 ersichtlich ist. Der erste Rohrabschnitt 1 hängt sodann mit der Steckmuffe $E_2$ oben am Seil und nach dem Einstecken eines weiteren Rohrabschnittes 1' wird um eine entsprechende Länge abgelassen.

Beim Einstecken, d.h. also beim gegenseitigen Verbinden der beiden einander benachbarten Rohrabschnitte 1, 1', wird der erste Rastvorsprung 4 des zweiten Rohrabschnittes 1' in den L-förmigen zweiten Rastvorsprung 7.1 des ersten Rohrabschnittes 1 eingeführt und in dessen zweitem L-Schenkel 10 (s. Fig. 1) in der Art eines Bajonettverschlusses verriegelt. Dieser "besondere Dreh" garantiert eine sichere formschlüssige Verbindung und verhindert beim Ablassen und später bei thermischer Belastung sicher ein Auseinanderrutschen der Rohrabschnitte 1, 1'. Diese die vorliegende Erfindung u.a. besonders auszeichnende Verriegelungsart ist auch nochmals in Fig. 6 verdeutlicht, und zwar in Fig. 6 a) der Einsteckvorgang und in Fig. 6 b) der Verriegelungsvorgang zur Bildung eines durchgehenden Schornstein-Einsatzrohres 2.

Etwa im Abstand von jeweils 2 m wird bei der Bildung des Schornstein-Einsatzrohres 2 ein Distanzhalter montiert, der mit zunächst senkrechten Streifen versehen ist, welche bei der Montage entsprechend dem Abstand zur Schornsteinwand gebogen werden, um auf diese Weise eine gute und sichere Zentrierung des Schornstein-Einsatzrohres 2 zu erzielen.

Wie aus Fig. 8 hervorgeht, kann mit den erfindungsgemäßen Rohrabschnitten 1 selbstverständlich auch ohne weiteres ein Schornstein-Einsatzrohr mit sonstigen Anforderungen wie bspw. einer Zwischenreinigung geschaffen werden. Zur Montage einer Zwischenreinigung (bspw. im Dachgeschoß) wird hier ebenfalls der Schornstein geöffnet und eine Prüföffnung 18 eingebaut. Dabei ist es regelmäßig zweckmäßig, eine Dehnmanschette 17 vorzusehen, damit unterhalb der Prüföffnung 18 die während des Betriebes erfolgende Längendehnung erhalten bleibt. Dieses ist außerdem bei Schornsteinhöhen über etwa 20 m etwa auf halber Höhe zweckmäßig, um eine gleichmäßige Dehnung des Schornstein-Einsatzrohres 2 im Schornstein 24 zu ermöglichen (s. Fig. 9).

Wie bereits weiter oben kurz erwähnt worden ist, zeigt Fig. 10 einen gezogenen Schornstein 24', bei dem ein Einbau mit verstellbaren Bogen, Dehnmanschette(n) 17, geeigneter Halterung und Rohrabschnitten 1 zunächst festgelegt wird und die Montage zweckmäßigerweise im Knick mit der Halterung beginnt und mit der Dehnmanschette 17 und dem ersten Bogen fortgesetzt wird. Der Rohrabschnitt 1 und der zweite Bogen werden zweckmäßigerweise mit einem Distanzhalter versehen, wie dieses oben unter Bezugnahme auf Fig. 7 bereits erläutert worden ist.

Fig. 11 zeigt (teilweise in einer Explosionsdarstellung) ein Installationsbeispiel, aus dem sich zugleich ergibt, weshalb eine größere Anzahl unterschiedlicher Einheitslängen der Rohrabschnitte 1 zweckmäßig ist.

Fig. 12 zeigt ein weiteres Installationsbeispiel für einen Standardschornstein 24 im fertig montierten Zustand. Außer den bereits genannten Teilen ist am oberen Ende ein Abdeckring 26 erkennbar, an dem sich ein Rohrabschnitt 1 von 333 mm Länge anschließt. Diesem folgt ersichtlich nach unten ein Distanzhalter 25, sodann ein Rohrabschnitt 1 einer Länge L von 500 mm, der unmittelbar mit einem Rohrabschnitt 1 einer Länge L von 1000 mm verbunden ist u.s.f.

An die am unteren Ende angeordnete Kondensatschale 19 schließt sich eine mit einer Kamintür 27 zu verschließende Prüföffnung-Verlängerung 21 an, die zu einer unteren Prüföffnung 18 führt. Darüber befindet sich der Feuerungsanschluß 20 u.s.f.

Es ist ohne weiteres erkennbar, daß mit der vorliegenden Erfindung eine allen Ansprüchen gerecht werdende Ausgestaltung für Rohrabschnitte 1 von Schornstein-Einsatzrohren 2 geschaffen worden ist, die sich unter Lösung der obigen Aufgabe gegenüber dem vorbekannten Stand der Technik in vielfältiger Weise vorteilhaft auszeichnet. Dabei kann die vorliegende Erfindung im Rahmen der Offenbarung einschließlich äquivalenter Ausführungsformen ersichtlich in vielfältiger Weise modifiziert werden, ohne daß derartige Modifizierungen den Erfindungsrahmen verlassen. Im übrigen ist es ohne weiteres erkennbar, daß die zwar insbesondere für Schornstein-Einsatzrohre bestimmten Rohrabschnitte sich auch für andere Rohrleitungen mit vergleichbaren Anforderungen in vielfältiger Weise vorteilhaft verwenden lassen, zumal der erfindungsgemäße Rohrabschnitt - wie ausgeführt - nicht etwa auf im wesentlichen lineare Rohrleitungen beschränkt ist, sondern ersichtlich auch alle möglichen anderen Rohrleitungsverläufe zuläßt, wie sich im übrigen bereits aus dem Ausführungsbeispiel gemäß Fig. 10 ohne weiteres ergibt.

## BEZUGSZEICHENLISTE

| | | |
|---|---|---|
| 1 | Rohrabschnitte | 1 |
| 2 | Schornstein-Einsatzrohr | 2 |
| 3 | erstes Ende (von 1) | 3 |
| 4 | erster Rastvorsprung | 4 |
| 5 | Außenseite (von 1) | 5 |
| 6 | zweites Ende (von 1) | 6 |
| 7 | zweiter Rastvorsprung (7.1; 7.2) | 7 |
| 8 | erster L-Schenkel (von 7.1) | 8 |
| 9 | Mittelachse (von 1) | 9 |
| 10 | zweiter L-Schenkel (von 7.1) | 10 |
| 11 | Einführabschnitt | 11 |
| 12 | Sicke | 12 |
| 13 | Flanke (von 12) | 13 |
| 14 | Innenseite (von 1) | 14 |
| 15 | Sicke | 15 |
| 16 | Abschnitt (von 1) | 16 |
| 17 | Dehnmanschette | 17 |
| 18 | Prüföffnung | 18 |
| 19 | Kondensatschale | 19 |
| 20 | Feuerungsanschluß | 20 |
| 21 | Prüföffnung-Verlängerung | 21 |
| 22 | Schornsteinkopf | 22 |
| 23 | Schlaufe          23' - Seil | 23 |
| 24, 24' | Schornstein | 24 |
| 25 | Distanzhalter | 25 |
| 26 | Abdeckung | 26 |
| 27 | Kamintür | 27 |

D — Außendurchmesser (von 1)

$E_1$ — Endabschnitt (von 1)

d — lichter Innendurchmesser (von 1)

$E_2$ — Endabschnitt (von 1) (= Steckmuffe)

a — Abstand (4/3)

b — Abstand (4/3)

c — Breite (von 7.1)

$\alpha$ — Rampenwinkel (von 4')

$\beta$ — Rampenwinkel (von 4')


**Patentansprüche**

1. Rohrabschnitt (1) für eine Rohrleitung, insbesondere für ein Schornstein-Einsatzrohr (2), bei der jeweils benachbarte Rohrabschnitte (1, 1) endseitig miteinander nach Art einer Steckverbindung verbunden sind, wobei der Außendurchmesser (D) des einen (ersten) Endabschnittes ($E_1$) eines Rohrabschnittes (1) dem lichten Innendurchmesser (d) des anderen (zweiten) Endabschnittes ($E_2$) des Rohrabschnittes (1) entspricht, mit wenigstens einem mit Abstand (a) zum einen (ersten) Ende (3) vorgesehenen ersten Rastvorsprung (4) und wenigstens einem mit entsprechendem Abstand (b) zum anderen (zweiten) Ende (6) vorgesehenen, L-förmigen zweiten Rastvorsprung (7.1.), der im montierten Zustand mit dem ersten Rastvorsprung (4) eines benachbarten Rohrabschnittes (1) formschlüssig zusammenwirkt, wobei der eine (erste) L-Schenkel (8) des zweiten Rastvorsprungs (7.1.) im wesentlichen achsparallel verläuft und die Breite (c) der L-Schenkel (8, 10) im wesentlichen gleich der größten Breite (e) des ersten Rastvorsprungs (4) ist, dadurch gekennzeichnet, daß der achsparallele erste L-Schenkel (8) des zweiten Rastvorsprungs (7.1.) mit Abstand (b) zum zweiten Ende (6) des Rohrabschnittes (1) endet; und daß der zweite L-Schenkel (10) des zweiten Rastvorsprungs (7.1.) im Bereich einer konzentrischen Sicke (7.2.) liegt, deren Breite im wesentlichen gleich der größten Breite des ersten Rastvorsprungs (4) ist.

2. Rohrabschnitt nach Anspruch 1, dadurch gekennzeichnet, daß der erste Rastvorsprung (4) im wesentlichen kegel- bzw. "pickelförmig" ausgebildet ist (Fig. 1, 2).

3. Rohrabschnitt nach Anspruch 1, dadurch gekennzeichnet, daß der erste Rastvorsprung (4') im wesentlichen tropfen- bzw. keilförmig ausgebildet ist (Fig. 1 b, c).

4. Rohrabschnitt nach Anspruch 3, dadurch gekennzeichnet, daß der erste Rastvorsprung (4') in seitlicher Ansicht rampenförmig ausgebildet ist, wobei der Rampenwinkel ($\alpha$) seines zum ersten Ende (3) des Rohrabschnittes (1) verlaufenden Abschnittes nur wenige Grad beträgt.

5. Rohrabschnitt nach Anspruch 3 oder 4, dadurch gekennzeichnet, daß der Rampenwinkel ($\beta$) des demm ersten Ende (3) des Rohrabschnittes (1) abgekehrten Abschnittes des ersten Rastvorsprungs (4') erheblich steiler als der andere Rampenwinkel ($\alpha$) ausgebildet ist.

6. Rohrabschnitt nach einem oder mehreren der vorhergehenden Ansprüche, dadurch gekennzeichnet, daß mehrere erste Rastvorsprünge (4) vorgesehen sind.

7. Rohrabschnitt nach Anspruch 6, dadurch gekennzeichnet, daß wenigstens zwei erste Rastvorsprünge (4) vorgesehen sind, die im wesentlichen mit gleichem Teilungswinkel angeordnet sind.

8. Rohrabschnitt nach einem oder mehreren der vorhergehenden Ansprüche, dadurch gekennzeichnet, daß sein eines Ende (6) umlaufend mit einer schräg nach außen verlaufenden Bördelung (11) versehen ist.

9. Rohrabschnitt nach einem oder mehreren der vorhergehenden Ansprüche, insbesondere nach Anspruch 8, gekennzeichnet durch eine über seine Außenseite (5) vorstehende, eingeformte, konzentrisch umlaufende Sicke (12), deren eine Flanke (13) im montierten Zustand am ersten Ende (3) eines benachbarten Rohrabschnittes - ggf. der Innenseite dessen Bördelung (11) - anliegt.

10. Rohrabschnitt nach einem oder mehreren der vorhergehenden Ansprüche, dadurch gekennzeichnet, daß die ersten und/oder zweiten Rastvorsprünge (4 bzw. 7) in die Rohrwandung eingeformt sind.

11. Rohrabschnitt nach einem oder mehreren der vorhergehenden Ansprüche, dadurch gekennzeichnet, daß er in an sich bekannter Weise aus rostfreiem Edelstahl besteht.

12. Rohrabschnitt nach einem oder mehreren der vorhergehenden Ansprüche, insbesondere nach Anspruch 11, gekennzeichnet durch eine Wandstärke von ca. 0,5 bis 1,0 mm.

13. Rohrabschnitt nach einem oder mehreren der vorhergehenden Ansprüche, gekennzeichnet durch eine (Einheits-) Länge von ca. 0,3 bis 1 m.

14. Rohrabschnitt nach einem oder mehreren der vorhergehenden Ansprüche, dadurch gekennzeichnet, daß die ersten und/oder zweiten Rastvorsprünge (4 bzw. 7) über die Außenseite (5) nach außen vorstehen.

15. Rohrabschnitt nach einem oder mehreren der Ansprüche 1 bis 13, dadurch gekennzeichnet, daß die ersten und/oder zweiten Rastvorsprünge (4 bzw. 7) über die Innenseite (14) nach innen vorstehen (Fig. 3, 4).

16. Rohrabschnitt nach einem oder mehreren der vorhergehenden Ansprüche, insbesondere nach Anspruch 15, dadurch gekennzeichnet, daß der (die) erste Rastvorsprung (ersten Rastvorsprünge) (4) als Sicke (4) od. dgl. ausgebildet ist (sind), die sich (nur) über einen Abschnitt einer kurzen Umfangslinie erstreckt (erstrecken) (Fig. 3, 4).

## Claims

1. Pipe section (1) for a pipe conduit, in particular for a chimney liner pipe (2), adjacent pipe sections (1, 1) in each case being connected together at the ends in the manner of a plug-in connection and the outside diameter (D) of one (the first) end section ($E_1$) of a pipe section (1) corresponding to the clear inside diameter (d) of the other (second) end section ($E_2$) of the pipe section (1), with at least one first locking projection (4), which is provided at a distance (a) from one (the first) end (3), and at least one L-shaped second locking projection (7.1.), which is provided at a corresponding distance (b) from the other (second) end (6) and co-operates positively with the first locking projection (4) of an adjacent pipe section (1) when assembled, one (the first) L-limb (8) of the second locking projection (7.1.) extending essentially paraxially and the width (c) of the L-limbs (8, 10) being essentially equal to the maximum width (e) of the first locking projection (4), characterised in that the paraxial first L-limb (8) of the second locking projection (7.1.) ends at a distance (b) from the second end (6) of the pipe section (1); and that the second L-limb (10) of the second locking projection (7.1.) lies in the area of a concentric bead (7.2.), the width of which is essentially equal to the maximum width of the first locking projection (4).

2. Pipe section according to claim 1, characterised in that the first locking projection (4) is essentially conical or "pimple-shaped" (Figures 1, 2).

3. Pipe section according to claim 1, characterised in that the first locking projection (4') is essentially drop-shaped or wedge-shaped (Figures 1b, 1c).

4. Pipe section according to claim 3, characterised in that the first locking projection (4') is ramp-shaped in side view, the ramp angle ($\alpha$) of its section which extends towards the first end (3) of the pipe section (1) only being a few degrees.

5. Pipe section according to claim 3 or 4, characterised in that the ramp angle ($\beta$) of the section of the first locking projection (4') which is distant from the first end (3) of the pipe section (1) is considerably steeper than the other ramp angle ($\alpha$).

6. Pipe section according to one or more of the preceding claims, characterised in that a plurality of first locking projections (4) are provided.

7. Pipe section according to claim 6, characterised in that at least two first locking projections (4) are provided which are arranged essentially at the same pitch angle.

8. Pipe section according to one or more of the preceding claims, characterised in that one (6) of its ends is provided all-round with a flange (11), which extends obliquely outwards.

9. Pipe section according to one or more of the preceding claims, in particular according to claim 8, characterised by a moulded, concentrically circulating bead (12), which projects beyond its outer surface and one (13) side of which bears against the first end (3) of an adjacent pipe section - possibly the inner surface of its flange (11) - when assembled.

10. Pipe section according to one or more of the preceding claims, characterised in that the first and/or second locking projections (4 and/or 7) are moulded into the pipe wall.

11. Pipe section according to one or more of the preceding claims, characterised in that it consists of high-quality stainless steel in a manner which is known per se.

12. Pipe section according to one or more of the preceding claims, in particular according to claim 11, characterised by a wall thickness of approximately 0.5 to 1.0 mm.

13. Pipe section according to one or more of the preceding claims, characterised by a (unit) length of approximately 0.3 to 1 m.

14. Pipe section according to one or more of the preceding claims, characterised in that the first and/or second locking projections (4 and/or 7) project outwards beyond the outer surface (5).

15. Pipe section according to one or more of claims 1 to 13, characterised in that the first and/or second locking projections (4 and/or 7) project inwards beyond the inner surface (14) (Figures 3, 4).

16. Pipe section according to one or more of the preceding claims, in particular according to claim 15, characterised in that the first locking projection(s) (4) is (are) formed as a bead (4) or the like, which (only) extend(s) over a section of a short circumferential line (Figures 3, 4).

**Revendications**

1. Section tubulaire (1) pour une conduite tubulaire, en particulier pour un conduit de tubage de cheminée (2), dans laquelle les sections tubulaires voisines respectives (1, 1) sont reliées entre elles par leurs extrémités sous la forme d'une liaison emboîtée, le diamètre extérieur (D) de l'une des sections extrêmes (la première) (E$_1$) d'une section tubulaire (1) correspondant au diamètre intérieur libre (d) de l'autre section extrême (la deuxième) (E$_2$) de la section tubulaire (1), comprenant au moins une première saillie de crantage (4) disposée à distance (a) de l'une des extrémités (la première) (3) et au moins une deuxième saillie de crantage en L (7.1.) qui est disposée à une distance correspondante (b) de l'autre extrémité (la deuxième) (6) et qui, en position montée, coopère de manière solidaire par sa forme avec la première saillie de crantage (4) d'une section tubulaire voisine (1), l'une des branches du L (la première) (8) de la deuxième saillie de crantage (7.1.) s'étendant de manière sensiblement parallèle à l'axe médian (9) de la section tubulaire (1), et la largeur (c) des branches (8, 10) du L étant sensiblement égale à la plus grande largeur (e) de la première saillie de crantage (4), caractérisée en ce que la première branche (8) du L, parallèle à l'axe médian (9) de la section tubulaire (1), de la deuxième saillie de crantage (7.1) se termine à une distance (b) de la deuxième extrémité (6) de la section tubulaire (1) ; et en ce que la deuxième branche (10) du L de la deuxième saillie de crantage (7.1.) se trouve dans la zone d'une moulure concentrique (7.2.) dont la largeur est sensiblement égale à la plus grande largeur de la première saillie de crantage (4).

2. Section tubulaire selon la revendication 1, caractérisée en ce que la première saillie de crantage (4) est réalisée sensiblement en forme de cône ou de bouton (figures 1, 2).

3. Section tubulaire selon la revendication 1, caractérisée en ce que la première saillie de crantage (4') est réalisée sensiblement en forme de goutte ou de coin (figures 1b, c).

4. Section tubulaire selon la revendication 3, caractérisée en ce que la première saillie de crantage (4') présente, en vue de côté, une forme de rampe, l'angle d'inclinaison (α) de sa section s'étendant vers la première extrémité (3) de la section tubulaire (1) n'étant que de quelques degrés.

5. Section tubulaire selon la revendication 3 ou 4, caractérisée en ce que l'angle d'inclinaison (β) de la section de la première saillie de crantage (4'), ladite section étant opposée à la première extrémité (3) de la section tubulaire (1), est nettement plus ouvert que l'autre angle d'inclinaison (α).

6. Section tubulaire selon une ou plusieurs des revendications précédentes, caractérisée en ce qu'il est prévu plusieurs premières saillies de crantage (4).

7. Section tubulaire selon la revendication 6, caractérisée en ce qu'il est prévu au moins deux premières saillies de crantage qui sont disposées sensiblement selon un angle de division égal.

8. Section tubulaire selon une ou plusieurs des revendications précédentes, caractérisée en ce que l'une de ses extrémités (6) est pourvue, à sa périphérie, d'un rebord (11) s'étendant de manière oblique vers l'extérieur.

9. Section tubulaire selon une ou plusieurs des revendications précédentes, en particulier selon la revendication 8, caractérisée par une moulure circulaire concentrique (12) qui est moulée et fait saillie sur son côté extérieur (5) et dont l'un des flancs (13) est appliqué, en position montée, contre la première extrémité (3) d'une section tubulaire voisine - le cas échéant contre le côté intérieur de son rebord (11).

10. Section tubulaire selon une ou plusieurs des revendications précédentes, caractérisée en ce que les premières et/ou deuxième saillies de crantage (4 et 7, respectivement) sont moulées dans la paroi tubulaire.

11. Section tubulaire selon une ou plusieurs des revendications précédentes, caractérisée en ce qu'elle est réalisée, d'une manière connue en soi, en acier fin inoxydable.

12. Section tubulaire selon une ou plusieurs des revendications précédentes, en particulier selon la revendication 11, caractérisée par une épaisseur de paroi d'environ 0,5 à 1,0 mm.

13. Section tubulaire selon une ou plusieurs des revendications précédentes, caractérisée par une longueur (unitaire) d'environ 0,3 à 1 m.

14. Section tubulaire selon une ou plusieurs des revendications précédentes, caractérisée en ce que les premières et/ou deuxièmes saillies de crantage (4 et 7, respectivement) font saillie vers l'extérieur sur le côté extérieur (5).

15. Section tubulaire selon une ou plusieurs des revendications 1 à 13, caractérisée en ce que les premières et/ou deuxièmes saillies de crantage (4 et 7, respectivement) font saillie vers l'intérieur sur le côté intérieur (14).

16. Section tubulaire selon une ou plusieurs des revendications précédentes, en particulier selon la revendication 15, caractérisée en ce que la (les) première saillie de crantage (premières saillies de crantage) (4) est (sont) réalisée(s) sous la forme d'une moulure (4) ou analogue qui s'étend (s'étendent) (seulement) sur une portion d'une courte ligne périphérique (figures 3, 4).

FIG.2

FIG.1

a)

b)

c)

FIG.4

FIG.3

FIG.5

FIG.6

FIG.7

FIG.8

FIG.9

12

FIG.10

FIG.11

FIG.12